# EUROPEAN PATENT SPECIFICATION

(11) **EP 4 550 495 B1**
(45) Date of publication and mention of the grant of the patent: **25.02.2026**
(21) Application number: 24197496.3
(22) Date of filing: 30.08.2024
(51) Int. Cl.: H01M 10/04, H01M 50/202, H01M 50/209, H01M 50/242, H01M 50/289, H01M 50/291, H01M 50/204, H01M 50/293

(54) **BATTERY MODULE COMPRISING ELASTIC PLATE AND BATTERY PACK COMPRISING THE SAME**
BATTERIEMODUL MIT ELASTISCHER PLATTE UND BATTERIEPACK DAMIT
MODULE DE BATTERIE COMPRENANT UNE PLAQUE ÉLASTIQUE ET BLOC-BATTERIE LE COMPRENANT

(30) Priority: 31.10.2023 KR 20230147964
(43) Date of publication of application: 07.05.2025
(73) Proprietor: SK On Co., Ltd., Seoul 03161 (KR)
(72) Inventor: PARK, Byung Jun, 34124 Daejeon (KR); GOO, Bon A, 34124 Daejeon (KR); PARK, Sin Ho, 34124 Daejeon (KR); PARK, Chan Ho, 34124 Daejeon (KR)
(74) Representative: Stolmár & Partner Patentanwälte PartG mbB

(56) References cited:
- CN-A- 106 785 196

## Description

### BACKGROUND

### 1. FIELD

The disclosure and implementations disclosed in this patent document generally relate to a battery module comprising an elastic plate and a battery pack comprising the same.

### 2. DESCRIPTION OF RELATED ART

Unlike a primary battery, a secondary battery may be charged and discharged, and thus may be applied to devices within various fields such as a digital camera, a mobile phone, a laptop personal computer (PC), a hybrid vehicle, an electric vehicle, and an energy storage system (ESS). The secondary battery may be a lithium-ion battery, a nickel-cadmium battery, a nickel-metal hydride battery, or a nickel-hydrogen battery.

The secondary battery may be manufactured by a flexible pouch-type battery cell or a rigid prismatic or cylindrical can-type battery cell. The plurality of battery cells may be formed as a stacked cell assembly.

The cell assembly may be disposed in a case to form a battery module, and the plurality of battery modules may be disposed in a pack housing to form a battery pack. The battery pack may be used in a variety of structures such as a vehicle or an energy storage system.

CN 106785196 A discloses a battery module according to the preamble of claim

### SUMMARY

A battery module may include a plurality of battery cells. However, such battery cells may be swollen due to overcharging, external impact, or aging. The size and shape of the battery module may be deformed and damaged due to the swelling of the battery cells.

A compression pad disposed between the battery cells may be used to absorb swelling force of the battery cell. However, the compression pad may cause increased production costs and manufacturing time of the battery module.

The present disclosure may be implemented in some embodiments to provide a battery module modified based on swelling of a battery cell to include an elastic plate capable of absorbing an impact, and a battery pack comprising the same.

The present disclosure may be implemented in some embodiments to provide a battery module requiring no compression pad to thus achieve a reduced production cost, and a battery pack comprising the same.

The present disclosure may be implemented in some embodiments to provide a battery module having a reduced assembly time by excluding an attachment process of a compression pad to a battery cell, and a battery pack comprising the same.

The battery module and the battery pack in the present disclosure may be widely applied in a green technology field such as to an electric vehicle, a battery charging station, and other solar power generation and wind power generation, using the battery. In addition, the battery module and the battery pack in the present disclosure may suppress air pollution and greenhouse gas emissions to thus be used in an eco-friendly electric vehicle, a hybrid vehicle, or the like for ameliorating a climate change.

The present invention relates to a battery module as recited in claim 1.

The plurality of battery cells may include a first battery cell and a second battery cell spaced apart from the first battery cell, and the buffer portion may include a first support region facing the first battery cell, a second support region facing the second battery cell, and a first bent region connecting the first support region and the second support region to each other.

The elastic plate may include a second bent region connecting the first support region and the cover part to each other, and a third bent region connecting the second support region and the cover part to each other.

The first support region may be spaced apart from the second support region, and the elastic plate may include a buffer space disposed between the first support region and the second support region, and configured to be deformed based on swelling of the battery cell.

The buffer portion may be in contact with at least some of the plurality of battery cells, and the buffer space may provide a path for air to flow.

As recited in claim 1, each of the plurality of end plates includes a protrusion having a hook, and the cover part includes a groove configured to accommodate the hook.

Each of the plurality of battery cells may include an electrode assembly, a case accommodating the electrode assembly, and a cap assembly connected to the case, and the case may include a first side, a second side opposite to the first side, and a third side extending from the first side to the second side and facing the buffer portion.

The elastic plate may include a first elastic plate and a second elastic plate spaced apart from the first elastic plate.

The first elastic plate may include a first cover part facing the first side, and a first buffer portion extending from the first cover part and disposed between the plurality of battery cells, the second elastic plate may include a second cover part facing the second side, and a second buffer portion extending from the second cover part and disposed between the plurality of battery cells, a portion of the first buffer portion may face a portion of the second buffer portion, and the third side may face the first buffer portion and the second buffer portion.

The third side may include an edge portion and a center portion surrounded by the edge portion, the edge portion may be in contact with the first buffer portion or the second buffer portion, and at least a portion of the center portion may be in contact with the first buffer portion and the second buffer portion.

The plurality of battery cells may include a third battery cell forming one end in a first direction and a fourth battery cell forming the other end in a second direction opposite to the first direction, and the end plate may include a first end cover configured to provide pressure to the third battery cell in the second direction, and a second end cover configured to provide pressure to the fourth battery cell in the first direction.

Two ends of the elastic plate may be respectively connected to the first end cover and the second end cover, and an elastic force may be provided to the first end cover and the second end cover in a direction in which the first end cover and the second end cover are close to each other.

The cover part and the buffer portion may form an accommodation space surrounding at least some of the plurality of battery cells.

The elastic plate may include stainless steel.

In some embodiments of the present disclosure, a battery pack includes: a plurality of battery modules as recited in claim 1; and a pack frame accommodating the plurality of battery modules.

### BRIEF DESCRIPTION OF DRAWINGS

FIG. 1 is a perspective view of a battery cell according to an embodiment.
FIG. 2 is a perspective view of a battery module according to an embodiment.
FIG. 3 is an exploded perspective view of the battery module according to an embodiment.
FIG. 4 is a perspective view of a battery cell fixation member according to an embodiment.
FIG. 5 is a top view of a battery pack combined with the elastic plate according to an embodiment.
FIG. 6 is a perspective view of the battery pack according to an embodiment.

### DETAILED DESCRIPTION

Hereinafter, embodiments of the present disclosure are described in detail with reference to the accompanying drawings. However, the embodiments are only exemplary, and the scope of the invention is defined by the appended claims.

The description omits details of the known function and structure. Further, some components shown in the accompanying drawings are exaggerated, omitted, or schematically shown, and the size of each component does not exactly reflect its real size.

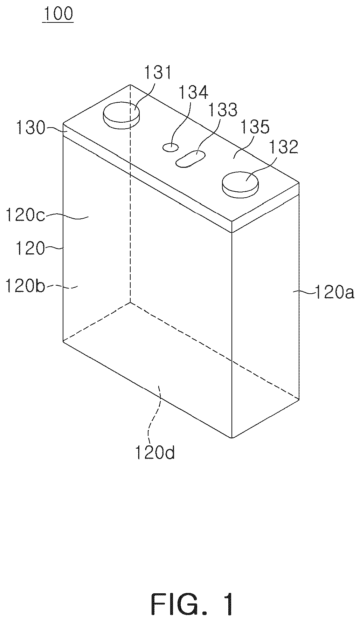

FIG. 1 is a perspective view of a battery cell according to an embodiment.

Referring to FIG. 1, a battery cell 100 may include a case 120 and a cap assembly 130. The battery cell 100 may be a secondary battery. For example, the battery cell 100 may be a lithium ion battery, and is not limited thereto. For example, the battery cell 100 may be a nickel-cadmium electric battery, a nickel-metal hydride battery, or a nickel-hydrogen battery, which may be charged and discharged.

The case 120 may accommodate an electrode assembly (not shown) and an electrolyte. The electrode assembly 110 may include a cathode plate, an anode plate, and a separator. The separator may prevent contact between the cathode plate and the anode plate. Those skilled in the art may understand that the electrode assembly may be manufactured using a variety of methods. According to example embodiments, the electrode assembly may be formed by repeatedly disposing the cathode, the anode, and the separator. In some embodiments, the electrode assembly may be a winding type, a stacking type, a Z-fold type, or a stack-folding type.

The case 120 may form at least a portion of an exterior of the battery cell 100. The case 120 may substantially have a shape of a rectangular parallelepiped, at least a portion of which is open. For example, the case 120 may include a first side 120a, a second side 120b opposite to the first side 120a, and a third side 120c extending from the first side 120a to the second side 120b, and a bottom side 120d. The third side 120c may be substantially perpendicular to the first side 120a or the second side 120b. The bottom side 120d may be substantially perpendicular to the first side 120a, the second side 120b, or the third side 120c. The area or width of the third side 120c may be larger than the area or width of the first side 120a or that of the second side 120b. In an embodiment, the first side 120a or the second side 120b may be referred to as a narrow side, and the third side 120c may be referred to as wide side. In an embodiment, the case 120 may include aluminum and/or stainless steel. In an embodiment, the case 120 may be referred to as a can or a housing.

The cap assembly 130 may be combined with the case 120. For example, the cap assembly 130 may be joined and connected to one end of the case. The cap assembly 130 may accommodate the electrode assembly and the electrolyte, together with the case 120.

The cap assembly 130 may include a plurality of components.

The cap assembly 130 may include a cap plate 135, which is combined with the case 120 to form a portion of the exterior of the battery cell 100.

The cap assembly 130 may include terminals 131 and 132 electrically connected to the electrode assembly. For example, the cap assembly 130 may include the first terminal 131 (e.g., cathode terminal) connected to the cathode plate of the electrode assembly and the second terminal 132 (e.g., anode terminal) connected to the anode plate of the electrode assembly. The first terminal 131 and the second terminal 132 may be exposed externally from the battery cell 100 through a hole formed in the cap plate 135.

The cap assembly 130 may include a venting part 133 providing a path for discharging a gas occurring in the electrode assembly externally from the case 120. The venting part 133 may include a notch that is broken at a specified pressure or above. The venting part 133 may be formed at the cap plate 135.

The cap assembly 130 may include an electrolyte sealing member 134. The electrolyte sealing member 134 may seal an electrolyte injection port formed at the cap plate 135. The electrolyte sealing member 134 may prevent the electrolyte from leaking out of the battery cell 100. The electrolyte sealing member 134 may include an electrolyte cap welded to the cap plate 135 and/or a locking ball inserted into the electrolyte injection port of the cap plate 135.

The components of the cap assembly 130 described above are only an embodiment. Accordingly, some of the components of the cap assembly 130 may be omitted or other components not described herein may be added. For example, the cap assembly 130 may include a current collector, an insulating plate, a resistance plate, a rivet terminal, and/or a gasket.

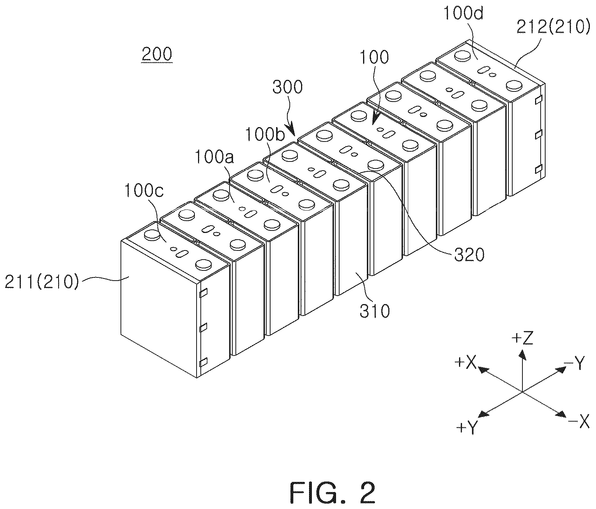

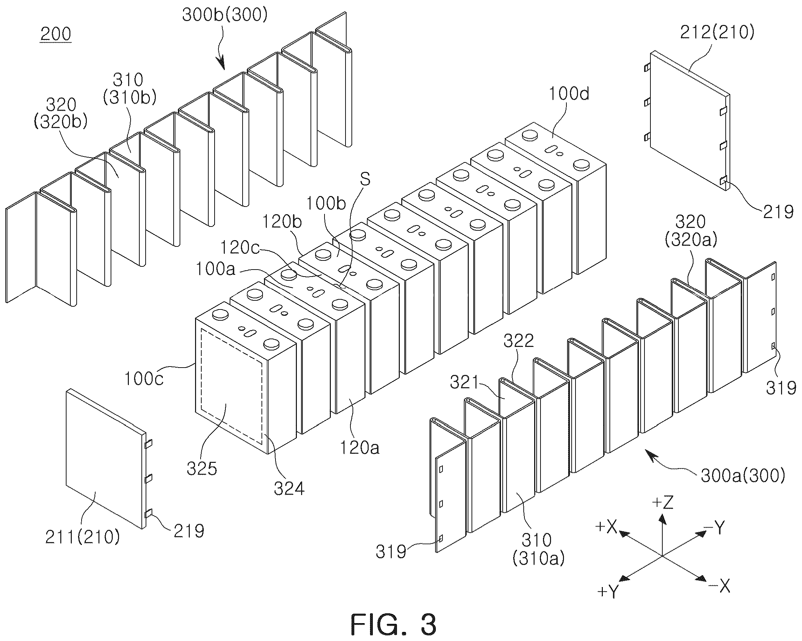

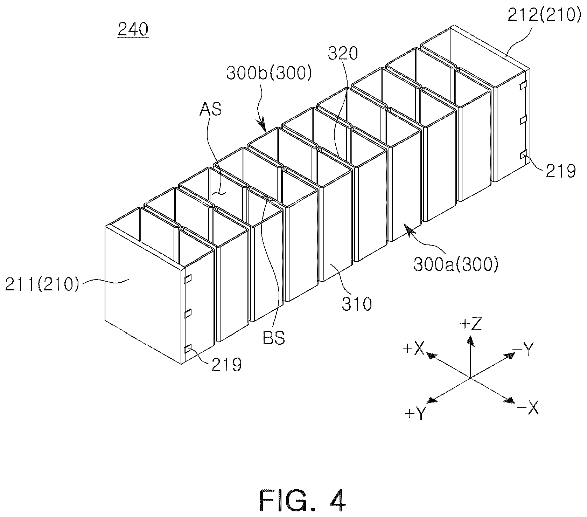

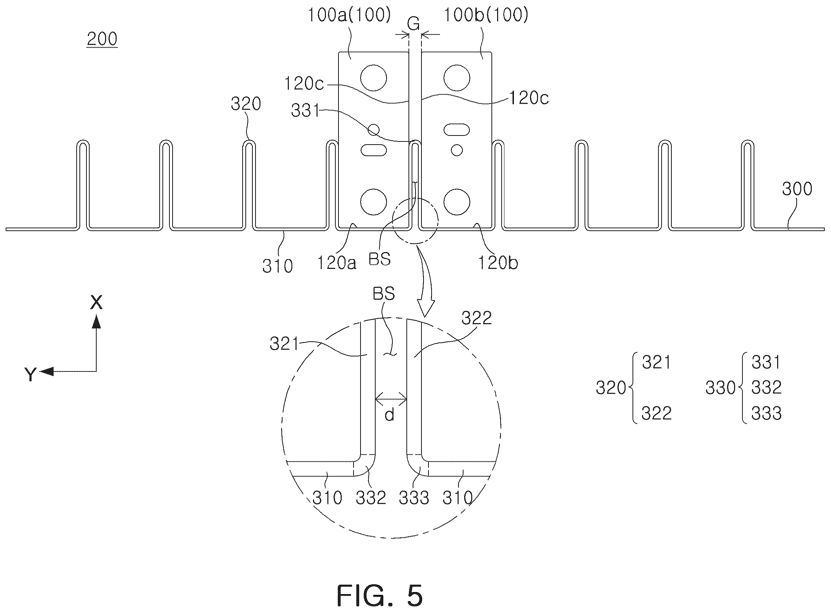

FIG. 2 is a perspective view of a battery module according to an embodiment. FIG. 3 is an exploded perspective view of the battery module according to an embodiment. FIG. 4 is a perspective view of a battery cell fixation member according to an embodiment. FIG. 5 is a top view of a battery pack combined with the elastic plate according to an embodiment.

Referring to FIGS. 2, 3, 4, and/or 5, a battery module 200 may include the plurality of battery cells 100, an end plate 210, and an elastic plate 300. The description of the battery cell 100 in FIG. 1 may be applied to the battery cell 100 in FIGS. 2, 3 and/or 5.

The plurality of battery cells 100 may be arranged to be parallel to each other. The plurality of battery cells 100 may be arranged in a first direction (e.g., +Y-axis direction). In an embodiment, the plurality of battery cells 100 may include a first battery cell 100a and a second battery cell 100b close to the first battery cell 100a. The second battery cell 100b may be one of the battery cells 100 closest to the first battery cell 100a among the plurality of battery cells 100. The plurality of battery cells 100 may be arranged to be spaced from each other. For example, the first battery cell 100a may be spaced apart from the second battery cell 100b by a specified gap G. In an embodiment, the plurality of battery cells 100 may be staggered with each other. For example, the battery cells 100 close to each other may be arranged so that the first terminal 131 and the second terminal 132 face different directions. The number of plurality of battery cells 100 shown in the present disclosure is exemplary.

The end plate 210 may form at least a portion of an exterior of the battery module 200. The end plate 210 may cover a portion of the battery cell 100 disposed at the outermost portion of the plurality of battery cells 100. For example, the plurality of battery cells 100 may include a third battery cell 100c forming one end in the first direction (e.g., +Y-direction) and a fourth battery cell 100d forming the other end in the second direction (e.g., -Y-direction) which is opposite to the first direction (+Y-direction). The end plate 210 may include a first end cover 211 covering at least a portion of the third battery cell 100c, and a second end cover 212 covering at least a portion of the fourth battery cell 100d. In an embodiment, the first end cover 211 may be referred to as a front cover, and the second end cover 212 may be referred to as a rear cover.

The end plate 210 may provide pressure (e.g., surface pressure) to the battery cell 100. For example, the end plate 210 may be in contact with the third side 120c of the battery cell 100, and provide the pressure to the third side 120c. In an embodiment, the first end cover 211 may provide the pressure to the third battery cell 100c in the second direction (-Y-direction). The second cover 212 may provide pressure to the fourth battery cell 100d in the first direction (+Y-direction). Swelling of the battery cell 100 may be reduced by the pressure provided by the end plate 210 to the battery cell 100.

In an embodiment (not shown), the battery module 200 may include the insulating plate (not shown) disposed between the end plate 210 and the battery cell 100.

The elastic plate 300 may form at least a portion of the exterior of the battery module 200, and accommodate the plurality of battery cells 100, together with the end plate 210. For example, the end plate 210 and the elastic plate 300 may surround the plurality of battery cells 100. For example, the plurality of battery cells 100 may be provided with the pressure from all the sides by the end plate 210 and the elastic plate 300. In an embodiment, the plurality of battery cells 100 may receive the pressure in the first direction (+Y-direction) and the second direction (-Y-direction) by the end plate 210, and receive the pressure in a third direction (+X-direction) and a fourth direction (-X-direction) by the elastic plate 300.

The end plate 210 and the elastic plate 300 combined with the end plate 210 may be referred to as a battery cell fixation member 240. Positions of the plurality of battery cells 100 may be maintained or fixed by the end plate 210 and the elastic plate 300. For example, the elastic plate 300 of the battery cell fixation member 240 may accommodate the battery cells 100. For example, a cover part 310 and a buffer portion 320 may form an accommodation space AS surrounding the battery cell 100. The accommodate space AS may be an empty space at least partially surrounded by the cover part 310 and the buffer portion 320.

The battery cell 100 may be inserted into the accommodation space AS, and the sides of the case 120 (e.g., first side 120a, second side 120b, and the third side 120c in FIG. 1) may be surrounded by the cover part 310 and the buffer portion 320. The accommodation space AS may be formed by a first elastic plate 300a and a second elastic plate 300b.

A plurality of buffer portions 320 may be spaced apart from each other to have the accommodation space AS. Each of the plurality of battery cells 100 may be disposed between the plurality of buffer portions 320 close to each other. The positions of the plurality of battery cells 100 may be maintained by an elastic force of the end plate 210 and/or the plurality of buffer portions 320 and a frictional force between the case 120 and the buffer portion 320. In an embodiment, the accommodation space AS may be formed by the end plate 210 and the elastic plate 300. The battery cell (e.g., third battery cell 100c or fourth battery cell 100d) disposed at the outermost portion of the plurality of battery cells 100 may be disposed in the accommodation space AS formed by the end plate 210 and the elastic plate 300.

The elastic plate 300 may at least partially cover the sides of the plurality of battery cells 100. For example, the elastic plate 300 may include a cover part 310 covering the sides of the plurality of battery cells 100. The cover part 310 may be in contact with the first side 120a or second side 120b of the battery cell 100. The cover part 310 of the first elastic plate 300a may be in contact with the first side 120a of the battery cell 100, and provide the pressure in the third direction (+X-direction) to the first side 120a. The cover part 310 of the second elastic plate 300b may be in contact with the second side 120b of the battery cell 100, and provide the pressure in the fourth direction (-X-direction) to the second side 120b. The plurality of cover parts 310 may be provided. For example, the cover part 310 may be a portion of the elastic plate 300 connecting the plurality of buffer portions 320 to each other. The number of cover parts 310 may be proportional to the number of battery cells 100 of the battery module 200. For example, in the battery module 200 including N battery cells 100, the battery module 200 may include 2N cover parts 310.

The elastic plate 300 may absorb at least a portion of a thickness change caused by the swelling of the plurality of battery cells 100. For example, the elastic plate 300 may include the buffer portion 320 disposed between at least some of the plurality of battery cells 100.

The buffer portion 320 may be contracted or compressed based on the thickness change in the battery cell 100. The buffer portion 320 may be deformed to thus prevent damage to the battery module 200. In an embodiment, the buffer portion 320 may be referred to as a leaf spring, a fin, or a flat clip. In an embodiment, the buffer portion 320 may be disposed between the battery cells 100 close to each other among the plurality of battery cells 100. For example, the plurality of battery cells 100 may include the first battery cell 100a and the second battery cell 100b spaced apart from the first battery cell 100a. The first battery cell 100a may be a random battery cell among the plurality of battery cells 100, and the second battery cell 100b may be the battery cell 100 closest to the first battery cell 100a among the plurality of battery cells 100. The buffer portion 320 may be disposed in the gap G between the first battery cell 100a and the second battery cell 100b.

The number of buffer portions 320 may be proportional to the number of battery cells 100 of the battery module 200. For example, in the battery module 200 in an embodiment that includes N battery cells 100, the battery module 200 may include 2(N-1) buffer portions 320.

The number of band members 320 may be selectively designed. FIGS. 2, 3, and/or 4 show that the battery module 200 includes the buffer portion 320 disposed between the plurality of battery cells 100, and a structure of the battery module 200 is not limited thereto. For example, in an embodiment (not shown), at least some (e.g., two) of the battery cells 100 may be in contact with each other, and the buffer portion 320 may be disposed between every two of the battery cells 100.

The buffer portion 320 may include a first support region 321 facing the first battery cell 100a and a second support region 322 facing the second battery cell 100b. The first support region 321 may be in contact with a portion of the third side 120c of the first battery cell 100a. The second support region 322 may be in contact with a portion of the third side 120c of the second battery cell 100b. The first support region 321 may be spaced apart from the second support region 322. For example, the elastic plate 300 may include a buffer space BS disposed between the first support region 321 and the second support region 322. The buffer space BS of the buffer portion 320 may be deformed based on the swelling of the battery cell 100. For example, a width d of the buffer space BS may be reduced when the battery cell 100 is swollen. The buffer space BS may reduce length deformation of the battery module 200 (e.g., its length in the Y-axis direction). The elastic plate 300 may absorb the swelling of the battery cell 100 and function as a damper by using a deformed shape of the buffer space BS. The width d of the buffer space BS may be shorter than the gap G between the battery cells 100.

In an embodiment, the elastic plate 300 may provide a flow path for cooling and/or heat dissipation of the battery cell 100. In an embodiment, the buffer space BS of the elastic plate 300 may provide a path for air to flow. The battery cell 100 may dissipate heat by air flowing through the buffer space BS. For example, the buffer portion 320 of the elastic plate 300 may increase a contact area between the battery module 200 and air. In an embodiment, the elastic plate 300 may be made of a material for the heat dissipation. The elastic plate 300 may be made of an elastic material. For example, the elastic plate 300 may include the stainless steel. However, the material of the elastic plate 300 is not limited to the stainless steel, as long as the elastic plate 300 uses a material that may provide elasticity and heat dissipation effects. In an embodiment, the elastic plate 300 may include a heat treated material to improve its elasticity and shape memory.

The elastic plate 300 may include the first elastic plate 300a and the second elastic plate 300b spaced apart from the first elastic plate 300a. The cover part 310 may include a first cover part 310a forming a portion of the first elastic plate 300a and a second cover part 310b forming a portion of the second elastic plate 300b. The buffer portion 320 may include a first buffer portion 320a forming a portion of the first elastic plate 300a and a second buffer portion 320b forming a portion of the second elastic plate 300b. The first elastic plate 300a may include the first cover part 310a covering one side of each of the plurality of battery cells 100 and the first buffer portion 320a extending from the first cover part 310a and disposed between at least some of the plurality of battery cells 100. The second elastic plate 300b may include the second cover part 310b covering the other side of each of the plurality of battery cells 100 and the second buffer portion 320b extending from the second cover part 310b and disposed between at least some of the plurality of battery cells 100.

The third side 120c of the battery cell 100 may be in contact with the buffer portion 320. The buffer portion 320 may extend to the center portion of the battery cell 100. For example, an edge portion 121 of the third side 120c may be in contact with the first buffer portion 320a or the second buffer portion 320b. At least a portion of a center portion 122 of the third side 120c may be in contact with the first buffer portion 320a and the second buffer portion 320b. The center portion 122 having a large amount of change due to the swelling of the battery cell 100 may be in contact with the two buffer portions (e.g., first buffer portion 320a and second buffer portion 320b), thereby increasing buffering and/or damper effects of the elastic plate 300.

The respective components of the elastic plates 300 may be integrated with each other. For example, the buffer portion 320 may extend from the cover part 310. In an embodiment, the buffer portion 320 may substantially have a "U" shape, and each of two ends of the buffer portion 320 may be connected to the cover part 310. The elastic plate 300 may be the leaf spring that is partially bent. The elastic plate 300 may include a plurality of bent regions 330. For example, the elastic plate 300 may include a first bent region 331 connecting the first support region 321 and the second support region 322 to each other. The elastic plate 300 may include a second bent region 332 connecting the first support region 321 and the cover part 310 to each other and a third bent region 333 connecting the second support region 322 and the cover part 310 to each other. The bent region 330 may increase a deformation rate of the elastic plate 300. For example, as curvatures of the first bent region 331, the second bent region 332, and/or the third bent region 333 are changed, a distance between the first support region 321 and the second support region 322 may be changed, and the elastic plate 300 may function as a damper for at least partially absorbing the deformation of the battery cell 100. In an embodiment, the elastic plate 300 may be referred to as a flat stair spring.

The elastic plate 300 may be combined with the end plate 210. As recited in claim 1, the end plate 210 includes a protrusion 219 having a hook, and the elastic plate 300 includes one combination groove 319 for accommodating the protrusion 219. In an embodiment (not shown), the end plate 210 and the elastic plate 300 may be combined with each other by at least one fastening member (e.g., bolt) (not shown).

The elastic plate 300 may provide the elastic force to the first end cover 211 and the second end cover 212 in a direction in which the first end cover 211 and the second end cover 212 are close to each other. For example, two ends of the elastic plate 300 (e.g., cover part 310 disposed on the outermost portions) may respectively be connected to the first end cover 211 or the second end cover 212. The elastic plate 300 may be contracted, and the first end cover 211 and the second end cover 212 may each provide the elastic force in a direction for pressing the battery cell 100.

The battery module 200 may include a bus bar assembly (not shown). The bus bar assembly may be electrically connected to the terminals 131 and 132 of the battery cell 100.

The bus bar assembly may include at least one connection terminal (not shown) for its electrical connection to the outside. The connection terminal may be electrically connected to a bus bar. The terminals 131 and 132 of the battery cell 100 may be electrically connected to the outside of the battery module 200 through the bus bar assembly.

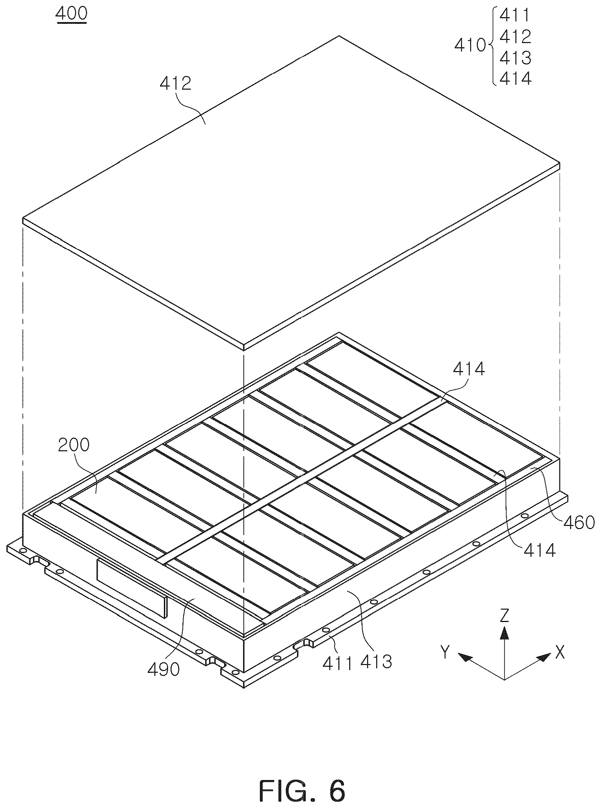

FIG. 6 is a perspective view of the battery pack according to an embodiment.

Referring to FIG. 6, a battery pack 400 may include the plurality of battery modules 200 and a pack frame 410 accommodating the plurality of battery modules 200. The description of the battery module 200 described above with reference to FIGS. 2 and 3 may be applied to the battery module 200 in FIG. 6. However, for convenience of explanation, a shape of the battery module 200 is partially omitted in FIG. 6.

The pack frame 410 may accommodate components of the battery pack 400 (e.g., battery module 200). The pack frame 410 may include a bottom member 411 supporting the battery module 200, a pack cover 412 covering the battery module 200, and a pack side wall 413 connecting the bottom member 411 and the pack cover 412. The bottom member 411 may support the bottom side 120d of the battery cell 100. The pack side wall 413 may face at least a portion of the elastic plate (e.g., elastic plate 300 in FIG. 2).

The pack frame 410 may include a partition 414 crossing at least some of the plurality of battery modules 200. For example, the accommodation space of the pack frame 410 may be partitioned into a plurality of spaces by the partition 414. The partition 414 may be installed across the accommodation space to reinforce rigidity of the pack frame 410. In an embodiment, at least some of the plurality of partitions 414 may include venting holes for guiding paths of gas and/or flame occurring in the battery module 200. The partition 414 may face at least a portion of the elastic plate (e.g., elastic plate 300 in FIG. 2). A structure of the pack frame 410 in the present disclosure is exemplary, and may depend on a design of the battery pack 400.

In an embodiment, the battery pack 400 may include a duct member 460. A flow space where the gas and/or flame discharged from the battery module 200 flows may be formed in the duct member 460. The duct member 460 may be disposed in the pack frame 410. The flow space of the duct member 460 may be connected to the venting hole in the partition 414. For example, the gas and/or flame occurring in the battery cell of the battery module 200 (e.g., battery cell 100 in FIG. 1) may pass through the venting hole formed in the partition 414 and the flow space of the duct member 460 to thus be transmitted externally from the battery pack 400.

The battery pack 400 may include a battery control unit 490 controlling the battery module 200. The battery control unit 490 may be disposed in the pack frame 410. The battery control unit 490 may include a battery management system (BMS). A configuration of the battery control unit 490 is known in various forms, and a detailed description is thus omitted. In an embodiment, the battery control unit 490 may be referred to as a processor.

As set forth above, according to an embodiment of the present disclosure, it is possible to absorb the thickness change caused by the swelling of the battery cell, and reduce the damage to the battery module.

According to an embodiment of the present disclosure, it is possible to reduce the production cost of the battery module or the battery pack.

According to an embodiment of the present disclosure, it is possible to reduce the assembly time of the battery module or the battery pack.

## Claims

1. A battery module comprising:
a plurality of battery cells (100);
a plurality of end plates (210) respectively disposed on both sides of the plurality of battery cells (100); and
an elastic plate (300) connected to the plurality of end plates (210),
wherein the elastic plate (300) includes
a cover part (310) covering sides of the plurality of battery cells (100), and
a buffer portion (320) extending from the cover part (310), and disposed between at least some of the plurality of battery cells (100),
**characterized in that**
each of the plurality of end plates (210) includes a protrusion (219) having a hook, and
the cover part (310) includes a groove (319) configured to accommodate the hook.

2. The battery module of claim 1, wherein the plurality of battery cells (100) include a first battery cell (100a) and a second battery cell (100b) spaced apart from the first battery cell, and
the buffer portion (320) includes a first support region (321) facing the first battery cell, a second support region (322) facing the second battery cell, and a first bent region (331) connecting the first support region (321) and the second support region (322) to each other.

3. The battery module of claim 2, wherein the elastic plate includes
a second bent region (332) connecting the first support region (321) and the cover part (310) to each other, and
a third bent region connecting the second support region and the cover part (310) to each other.

4. The battery module of claim 2, wherein the first support region (321) is spaced apart from the second support region, and
the elastic plate includes a buffer space (BS) disposed between the first support region (321) and the second support region (322), and configured to be deformed based on swelling of the plurality of battery cells (100).

5. The battery module of claim 4, wherein the buffer portion (320) is in contact with at least some of the plurality of battery cells (100), and
the buffer space (BS) provides a path for air to flow.

6. The battery module of any one of preceding claims, wherein each of the plurality of battery cells (100) includes an electrode assembly, a case (120) accommodating the electrode assembly, and a cap assembly (130) connected to the case (120), and
the case (120) includes a first side (120a), a second side (120b) opposite to the first side, and a third side (120c) extending from the first side to the second side and facing the buffer portion (320).

7. The battery module of claim 6, wherein the elastic plate (300) includes a first elastic plate and a second elastic plate spaced apart from the first elastic plate.

8. The battery module of claim 7, wherein the first elastic plate (300a) includes a first cover part (310a) facing the first side, and a first buffer portion (320a) extending from the first cover part and disposed between at least some of the plurality of battery cells (100),
the second elastic plate (300b) includes a second cover part (310b) facing the second side, and a second buffer portion (320b) extending from the second cover part (310b) and disposed between the plurality of battery cells (100),
a portion of the first buffer portion (320a) faces a portion of the second buffer portion (320b), and
the third side (120c) faces the first buffer portion and the second buffer portion.

9. The battery module of claim 8, wherein the third side (120c) includes an edge portion (121) and a center portion (122) surrounded by the edge portion,
the edge portion (121) is in contact with the first buffer portion (320a) or the second buffer portion (320b), and
at least a portion of the center portion (122) is in contact with the first buffer portion (320a) and the second buffer portion (320b).

10. The battery module of any one of preceding claims, wherein the plurality of battery cells (100) include a third battery cell (100c) forming one end in a first direction and a fourth battery cell (100d) forming the other end in a second direction opposite to the first direction, and
the end plate (210) includes a first end cover (211) configured to provide pressure to the third battery cell in the second direction, and a second end cover (212) configured to provide pressure to the fourth battery cell in the first direction.

11. The battery module of claim 10, wherein two ends of the elastic plate (300) are respectively connected to the first end cover (211) and the second end cover (212), and
an elastic force is provided to the first end cover and the second end cover in a direction in which the first end cover (211) and the second end cover (212) are close to each other.

12. The battery module of any one of preceding claims, wherein the cover part (310) and the buffer portion (320) form an accommodation space surrounding at least some of the plurality of battery cells (100).

13. The battery module of any one of preceding claims, wherein the elastic plate (300) includes stainless steel.

14. A battery pack comprising:
a plurality of battery modules (200) of claim 1; and
a pack frame (410) accommodating the plurality of battery modules (200).

## Patentansprüche

1. Batteriemodul, umfassend:
eine Vielzahl von Batteriezellen (100);
eine Vielzahl von Endplatten (210), die jeweils auf beiden Seiten der Vielzahl von Batteriezellen (100) angeordnet sind; und
eine elastische Platte (300), die mit der Vielzahl von Endplatten (210) verbunden ist,
wobei die elastische Platte (300) enthält:
ein Abdeckteil (310), das Seiten der Vielzahl von Batteriezellen (100) abdeckt, und
einen Pufferabschnitt (320), der sich von dem Abdeckteil (310) erstreckt und zwischen mindestens einigen der Vielzahl von Batteriezellen (100) angeordnet ist,
**dadurch gekennzeichnet, dass**
jede der Vielzahl von Endplatten (210) einen Vorsprung (219) mit einem Haken enthält, und
das Abdeckteil (310) eine Nut (319) enthält, die konfiguriert ist, um den Haken aufzunehmen.

2. Batteriemodul nach Anspruch 1, wobei die Vielzahl von Batteriezellen (100) eine erste Batteriezelle (100a) und eine zweite Batteriezelle (100b), die von der ersten Batteriezelle beabstandet ist, enthält, und
der Pufferabschnitt (320) einen ersten Stützbereich (321), der der ersten Batteriezelle zugewandt ist, einen zweiten Stützbereich (322), der der zweiten Batteriezelle zugewandt ist, und einen ersten gebogenen Bereich (331), der den ersten Stützbereich (321) und den zweiten Stützbereich (322) miteinander verbindet, enthält.

3. Batteriemodul nach Anspruch 2, wobei die elastische Platte enthält:
einen zweiten gebogenen Bereich (332), der den ersten Stützbereich (321) und das Abdeckteil (310) miteinander verbindet, und
einen dritten gebogenen Bereich, der den zweiten Stützbereich und das Abdeckteil (310) miteinander verbindet.

4. Batteriemodul nach Anspruch 2, wobei der erste Stützbereich (321) von dem zweiten Stützbereich beabstandet ist, und
die elastische Platte einen Pufferraum (BS) enthält, der zwischen dem ersten Stützbereich (321) und dem zweiten Stützbereich (322) angeordnet ist und konfiguriert ist, um basierend auf einer Schwellung der Vielzahl von Batteriezellen (100) verformt zu werden.

5. Batteriemodul nach Anspruch 4, wobei der Pufferabschnitt (320) mit mindestens einigen der Vielzahl von Batteriezellen (100) in Kontakt ist, und
der Pufferraum (BS) einen Weg zum Strömen von Luft bereitstellt.

6. Batteriemodul nach einem der vorhergehenden Ansprüche, wobei jede der Vielzahl von Batteriezellen (100) eine Elektrodenanordnung, ein Gehäuse (120), das die Elektrodenanordnung aufnimmt, und eine Kappenanordnung (130), die mit dem Gehäuse (120) verbunden ist, enthält, und
das Gehäuse (120) eine erste Seite (120a), eine zweite Seite (120b) gegenüber der ersten Seite und eine dritte Seite (120c), die sich von der ersten Seite zu der zweiten Seite erstreckt und dem Pufferabschnitt (320) zugewandt ist, enthält.

7. Batteriemodul nach Anspruch 6, wobei die elastische Platte (300) eine erste elastische Platte und eine zweite elastische Platte, die von der ersten elastischen Platte beabstandet ist, enthält.

8. Batteriemodul nach Anspruch 7, wobei die erste elastische Platte (300a) ein erstes Abdeckteil (310a), das der ersten Seite zugewandt ist, und einen ersten Pufferabschnitt (320a), der sich von dem ersten Abdeckteil erstreckt und zwischen mindestens einigen der Vielzahl von Batteriezellen (100) angeordnet ist, enthält,
die zweite elastische Platte (300b) ein zweites Abdeckteil (310b), das der zweiten Seite zugewandt ist, und einen zweiten Pufferabschnitt (320b), der sich von dem zweiten Abdeckteil (310b) erstreckt und zwischen der Vielzahl von Batteriezellen (100) angeordnet ist, enthält,
ein Abschnitt des ersten Pufferabschnitts (320a) einem Abschnitt des zweiten Pufferabschnitts (320b) zugewandt ist und
die dritte Seite (120c) dem ersten Pufferabschnitt und dem zweiten Pufferabschnitt zugewandt ist.

9. Batteriemodul nach Anspruch 8, wobei die dritte Seite (120c) einen Kantenabschnitt (121) und einen Mittelabschnitt (122), der von dem Kantenabschnitt umgeben ist, enthält,
der Kantenabschnitt (121) mit dem ersten Pufferabschnitt (320a) oder dem zweiten Pufferabschnitt (320b) in Kontakt ist und
mindestens ein Abschnitt des Mittelabschnitts (122) mit dem ersten Pufferabschnitt (320a) und dem zweiten Pufferabschnitt (320b) in Kontakt ist.

10. Batteriemodul nach einem der vorhergehenden Ansprüche, wobei die Vielzahl von Batteriezellen (100) eine dritte Batteriezelle (100c), die ein Ende in einer ersten Richtung bildet, und eine vierte Batteriezelle (100d), die das andere Ende in einer zweiten Richtung entgegengesetzt zu der ersten Richtung bildet, enthält, und
die Endplatte (210) eine erste Endabdeckung (211), die konfiguriert ist, um der dritten Batteriezelle in der zweiten Richtung Druck bereitzustellen, und eine zweite Endabdeckung (212), die konfiguriert ist, um der vierten Batteriezelle in der ersten Richtung Druck bereitzustellen, enthält.

11. Batteriemodul nach Anspruch 10, wobei zwei Enden der elastischen Platte (300) jeweils mit der ersten Endabdeckung (211) und der zweiten Endabdeckung (212) verbunden sind, und
eine elastische Kraft an der ersten Endabdeckung und der zweiten Endabdeckung in einer Richtung bereitgestellt wird, in der die erste Endabdeckung (211) und die zweite Endabdeckung (212) nahe beieinander sind.

12. Batteriemodul nach einem der vorhergehenden Ansprüche, wobei das Abdeckteil (310) und der Pufferabschnitt (320) einen Aufnahmeraum bilden, der mindestens einige der Vielzahl von Batteriezellen (100) umgibt.

13. Batteriemodul nach einem der vorhergehenden Ansprüche, wobei die elastische Platte (300) rostfreien Stahl enthält.

14. Batteriepack, umfassend:
eine Vielzahl von Batteriemodulen (200) nach Anspruch 1; und
einen Packrahmen (410), der die Vielzahl von Batteriemodulen (200) aufnimmt.

## Revendications

1. Module de batterie comprenant :
une pluralité de cellules de batterie (100) ;
une pluralité de plaques d'extrémité (210) disposées respectivement des deux côtés de la pluralité de cellules de batterie (100) ; et
une plaque élastique (300) reliée à la pluralité de plaques d'extrémité (210),
la plaque élastique (300) comprenant :
une partie de recouvrement (310) recouvrant les côtés de la pluralité de cellules de batterie (100), et
une partie tampon (320) s'étendant à partir de la partie de recouvrement (310) et disposée entre au moins certaines de la pluralité de cellules de batterie (100),
**caractérisée en ce que**
chacune des multiples plaques d'extrémité (210) comprend une saillie (219) avec un crochet, et
la partie de recouvrement (310) comprend une rainure (319) configurée pour recevoir le crochet.

2. Module de batterie selon la revendication 1, dans lequel la pluralité de cellules de batterie (100) comprend une première cellule de batterie (100a) et une deuxième cellule de batterie (100b) espacée de la première cellule de batterie, et
la partie tampon (320) comprend une première zone de support (321) tournée vers la première cellule de batterie, une deuxième zone de support (322) tournée vers la deuxième cellule de batterie et une première zone courbée (331) reliant la première zone de support (321) et la deuxième zone de support (322) l'une à l'autre.

3. Module de batterie selon la revendication 2, dans lequel la plaque élastique comprend :
une deuxième partie courbée (332) reliant la première partie de support (321) et l'élément de recouvrement (310) ; et
une troisième partie courbée reliant la deuxième partie de support et l'élément de recouvrement (310) l'un à l'autre.

4. Module de batterie selon la revendication 2, dans lequel la première partie de support (321) est espacée de la deuxième partie de support, et
la plaque élastique comprend un espace tampon (BS) disposé entre la première partie de support (321) et la deuxième partie de support (322) et configuré pour être déformé en fonction du gonflement de la pluralité de cellules de batterie (100).

5. Module de batterie selon la revendication 4, dans lequel la section tampon (320) est en contact avec au moins certaines de la pluralité de cellules de batterie (100), et
l'espace tampon (BS) fournit un chemin pour la circulation de l'air.

6. Module de batterie selon l'une des revendications précédentes, dans lequel chacune de la pluralité de cellules de batterie (100) comprend un ensemble d'électrodes, un boîtier (120) qui reçoit l'ensemble d'électrodes, et un ensemble de capuchon (130) relié au boîtier (120), et
le boîtier (120) comprend un premier côté (120a), un deuxième côté (120b) opposé au premier côté et un troisième côté (120c) s'étendant du premier côté vers le deuxième côté et faisant face à la partie tampon (320).

7. Module de batterie selon la revendication 6, dans lequel la plaque élastique (300) comprend une première plaque élastique et une deuxième plaque élastique espacée de la première plaque élastique.

8. Module de batterie selon la revendication 7, dans lequel la première plaque élastique (300a) comprend une première partie de recouvrement (310a) tournée vers le premier côté et une première partie tampon (320a) s'étendant à partir de la première partie de recouvrement et disposée entre au moins certaines de la pluralité de cellules de batterie (100),
la deuxième plaque élastique (300b) comprend une deuxième partie de recouvrement (310b) tournée vers le deuxième côté et une deuxième partie tampon (320b) s'étendant à partir de la deuxième partie de recouvrement (310b) et disposée entre la pluralité de cellules de batterie (100),
une partie de la première partie tampon (320a) fait face à une partie de la deuxième partie tampon (320b) et
le troisième côté (120c) est tourné vers la première partie tampon et la deuxième partie tampon.

9. Module de batterie selon la revendication 8, dans lequel le troisième côté (120c) comprend une partie de bord (121) et une partie centrale (122) entourée par la partie de bord,
la partie de bord (121) étant en contact avec la première partie tampon (320a) ou la deuxième partie tampon (320b) et
au moins une partie de la partie centrale (122) est en contact avec la première partie tampon (320a) et la deuxième partie tampon (320b).

10. Module de batterie selon l'une des revendications précédentes, dans lequel la pluralité de cellules de batterie (100) comprend une troisième cellule de batterie (100c) formant une extrémité dans une première direction et une quatrième cellule de batterie (100d) formant l' e autre extrémité dans une deuxième direction opposée à la première direction, et
la plaque d'extrémité (210) comprend un premier couvercle d'extrémité (211) configuré pour exercer une pression sur la troisième cellule de batterie dans la deuxième direction, et un deuxième couvercle d'extrémité (212) configuré pour exercer une pression sur la quatrième cellule de batterie dans la première direction.

11. Module de batterie selon la revendication 10, dans lequel deux extrémités de la plaque élastique (300) sont respectivement reliées au premier couvercle d'extrémité (211) et au deuxième couvercle d'extrémité (212), et
une force élastique est appliquée au premier couvercle d'extrémité et au deuxième couvercle d'extrémité dans une direction dans laquelle le premier couvercle d'extrémité (211) et le deuxième couvercle d'extrémité (212) sont proches l'un de l'autre.

12. Module de batterie selon l'une des revendications précédentes, dans lequel l'élément de recouvrement (310) et la partie tampon (320) forment un espace de réception qui entoure au moins certaines de la pluralité de cellules de batterie (100).

13. Module de batterie selon l'une des revendications précédentes, dans lequel la plaque élastique (300) comprend de l'acier inoxydable.

14. Bloc-batterie comprenant :
une pluralité de modules de batterie (200) selon la revendication 1 ; et
un cadre d'emballage (410) qui reçoit la pluralité de modules de batterie (200).
